# EUROPEAN PATENT SPECIFICATION

(11) **EP 2 159 152 B1**
(45) Date of publication and mention of the grant of the patent: **25.01.2012**
(21) Application number: 08163108.7
(22) Date of filing: 27.08.2008
(51) Int. Cl.: B62L 1/16

(54) **Bicycle brake device**
Bremsvorrichtung für ein Fahrrad
Dispositif de freinage pour bicyclette

(43) Date of publication of application: 03.03.2010
(73) Proprietor: Lin, Chang Hui, Siushui Hsiang, Chang hua 50446 (TW)
(72) Inventor: Lin, Chang Hui, Siushui Hsiang, Chang hua 50446 (TW)
(74) Representative: Beck & Rössig European Patent Attorneys

(56) References cited:
- CH-A- 383 189
- DE-A1- 2 800 364
- DE-A1- 4 328 758
- DE-U1- 8 716 344
- FR-A- 663 108
- FR-A- 2 203 348
- GB-A- 989 562
- GB-A- 2 145 484
- US-A1- 2005 061 587

## Description

The invention relates to a balanced bicycle brake device for effectively braking the wheel rim of the bicycle.

Typical bicycle brake devices comprise a pair of cantilevers mounted on the brackets or forks, two brake shoes attached on the cantilevers, and a brake wire coupled to the cantilevers for forcing the brake shoes to brake the wheel rim.

However, the cantilevers are indirectly coupled to the brake wire with arch wires or hangers, and may not force the brake shoes to effectively brake the wheel rim.

Further, there are caliper type brakes where the brake mounts to a single point above the wheel. Contemporary brake design for road bicycles focuses on single-pivot side-pull caliper brakes and in particular dual-pivot side-pull caliper brakes. Another type of side-pull caliper brakes are synchronized brakes that use a carrier plate on which two calipers are pivotally mounted. A caliper type brake comprising the features of the preamble portion of claim 1 is known from GB 2 145 484 A.Further caliper type brakes are known from GB 989,562 A, CH 383189 A, DE 87 16 344.6 U1, US 2005/0061587 A1, FR 2.203.348 A, and DE 43 28 758 A1.

The invention is to provide a bicycle brake device including a balanced structure for effectively clamping and braking the wheel rim of the bicycle wheel.

This object is achieved by a brake according to claim 1. Advantageous embodiments are laid down in further claims.

In the drawings:
FIG. 1 is a partial exploded view of a bicycle brake device;
FIGS. 2, 3 are perspective views of the bicycle brake device;
FIGS. 4, 5 are plan views of the bicycle brake device;
FIG. 6 is another partial exploded view;
FIG. 7 is a perspective view of the device in FIG. 6; and
FIGS. 8, 9 are plan views of the device as shown in FIGS 6-7.

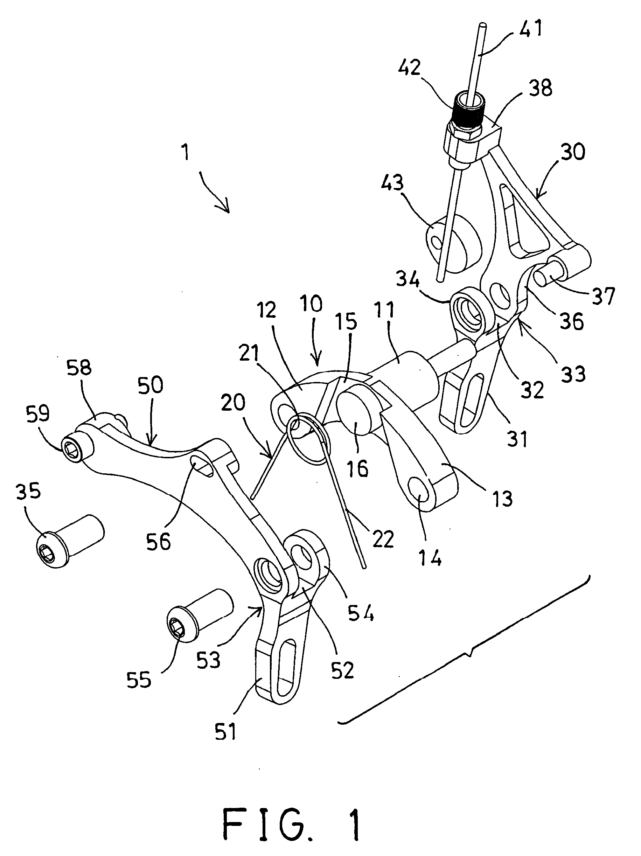

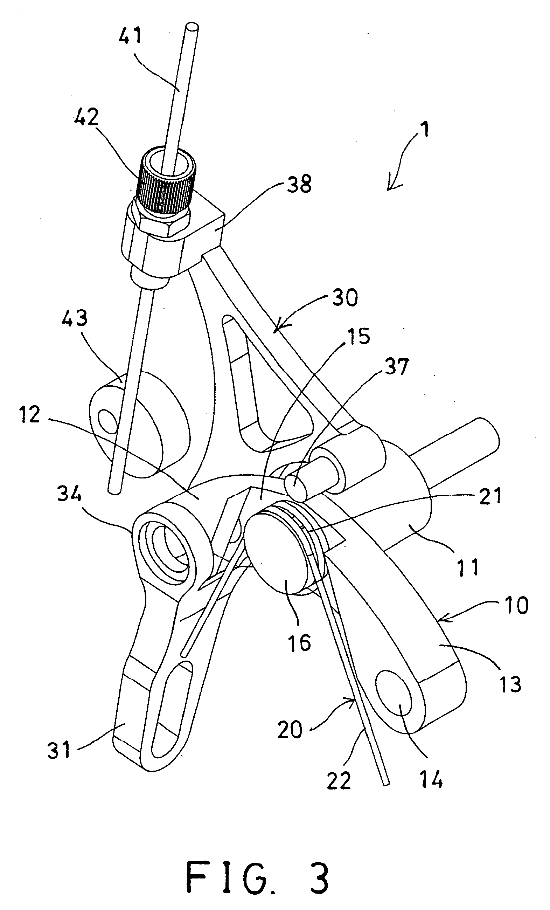

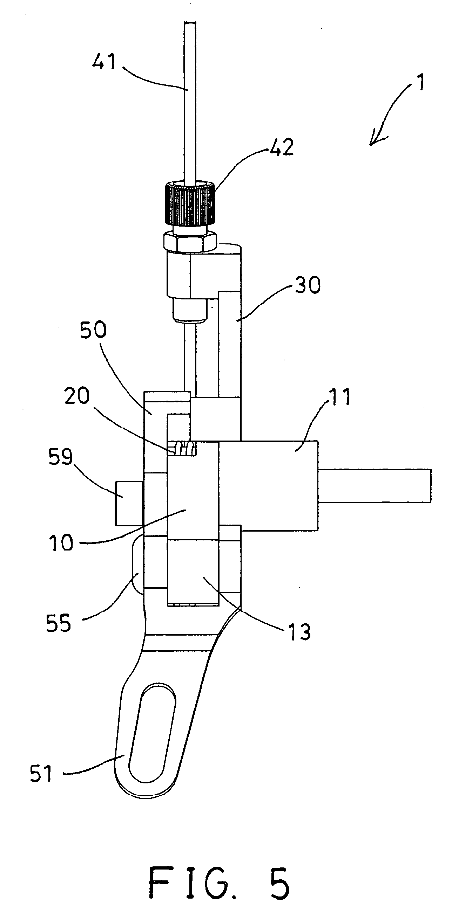

Referring to FIGS. 1 to 5, a bicycle brake device 1 comprises a holder arm 10 including a middle pivot shaft 11 for mounting on a bicycle, two end portions 12, 13 each having an orifice 14, a depression 15 formed in front of the arm 10 and opposite to the shaft 11, and a projection 16 extended into the depression 15, a spring 20 includes a middle ring 21 for engaging with the projection 16 and includes two legs 22. A first brake caliper 30 includes a lower portion 31 for mounting a brake shoe 88, and a notch 32 formed in the middle portion 33 for mounting one end 12 of the arm 10, an ear 34 extended from the middle portion 33 of the caliper 30 for forming the notch 32 and for anchoring the end portion 12 of the arm 10.

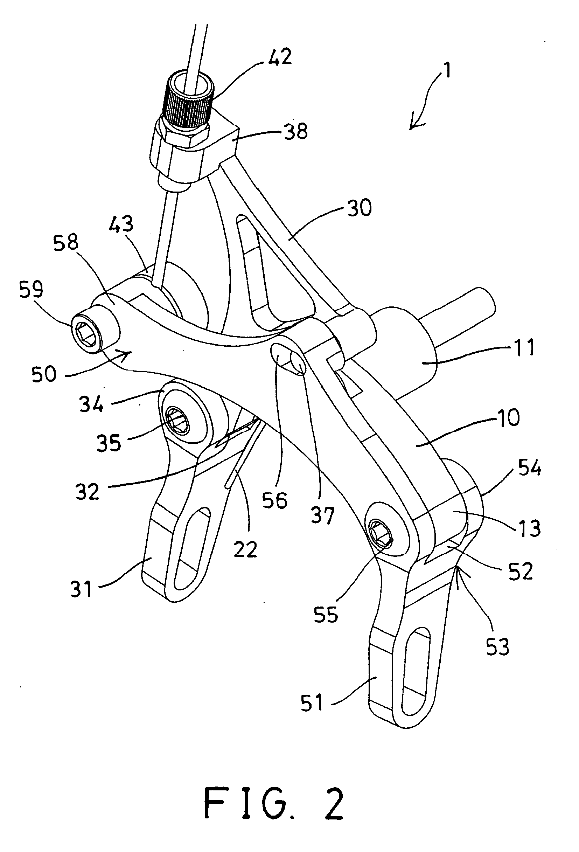

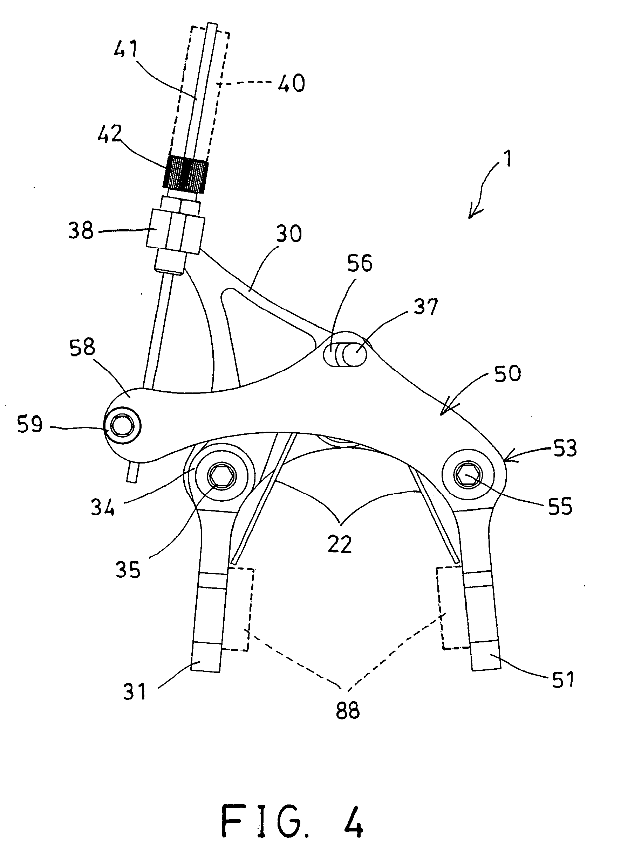

A pin 35 is engaged through the one end 12 of the arm 10 and the ear 34 and the caliper 30 for coupling the middle portion 33 of the caliper 30 to the arm 10. The first caliper 30 includes a curved recess 36 formed in the middle portion 33 for engaging with the shaft 11 of the arm 10, an anchor 37 extended from the middle portion 33 of the caliper 30 and perpendicular to the caliper 30, and the caliper 30 includes an upper portion 38 for attaching an outer tube 40 (FIG. 4) with an adjustment nut 42, and a brake cable 41 is engaged through the outer tube 40, and a fitting 43 is attached to the end of the brake cable 41 (FIGS. 1, 2).

A second brake caliper 50 includes a lower portion 51 for mounting a brake shoe 88, a notch 52 formed in the middle portion 53 for mounting the other end 13 of the arm 10, and an ear 54 extended from the middle portion 53 for forming the notch 52 and for anchoring the other end 14 of the arm 10. Another pivot pin 55 is engaged through the other end 13 of the arm 10 and the ear 54 and the second caliper 50 for coupling the middle portion 53 of the second caliper 50 to the arm 10. The second caliper 50 includes an oblong hole 56 formed in the middle portion 53 for receiving the anchor 37 and for slidably coupling the calipers 30, 50 together and for limiting the calipers 30, 50 to move relative to each other. The second caliper 50 includes an upper portion 58 for attaching the brake cable 41 with the fitting 43 and a fastener 59 or the like, and for allowing the upper portions 38, 58 of the calipers 30, 50 to be moved toward each other with the brake cable 41, and for allowing the lower portions 31, 51 and the brake shoes 88 to be forced toward each other to brake the bicycle wheel.

The arm 10 is solidly mounted on the mounting the bicycle with the shaft 11, and the middle portions 33, 53 of the calipers 30, 50 are solidly mounted on the arm 10 such that the upper portions 38, 58 of the calipers 30, 50 may be effectively forced toward each other with the brake cable 41, and such that the lower portions 31, 51 of the calipers 30, 50 and the brake shoes 88 may be effectively forced toward each other to brake the bicycle wheel. The sliding engagement of the anchor 37 of the first caliper 30 in the oblong hole 56 of the second caliper 50 allows the middle portions 33, 53 of the calipers 30, 50 to be slightly moved relative to each other. The legs 22 of the spring 20 may be engaged with the lower portions 31, 51 of the calipers 30, 50 for biasing the brake shoes 88 away from the wheel rim when the brake cable 41 is released.

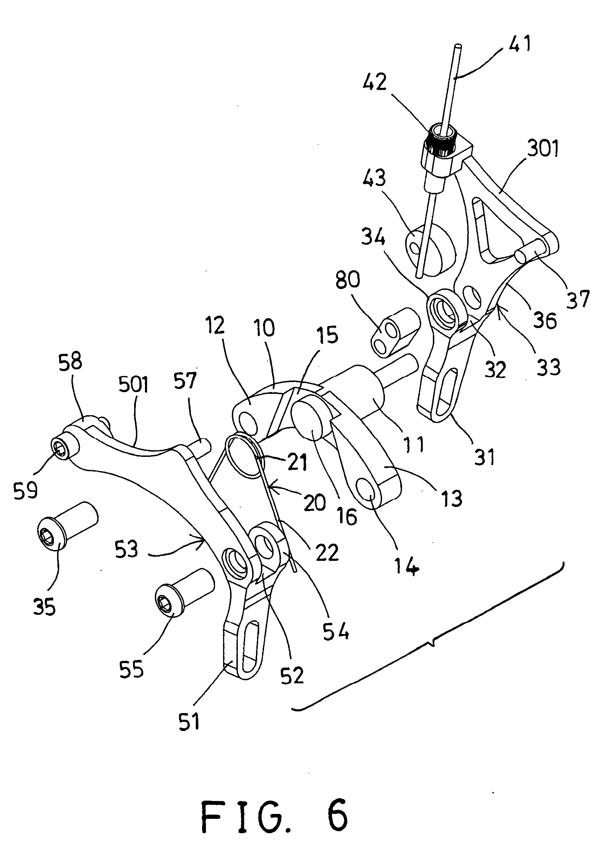

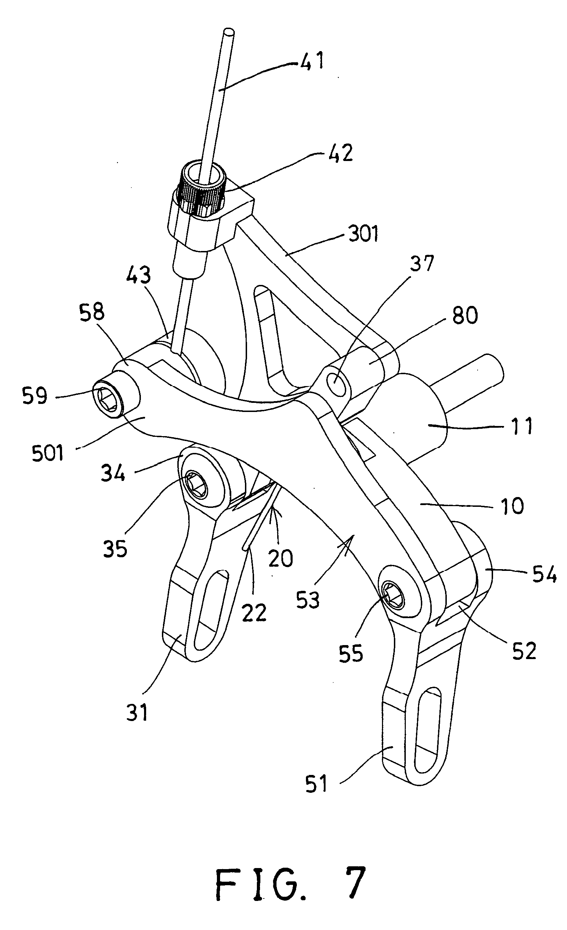

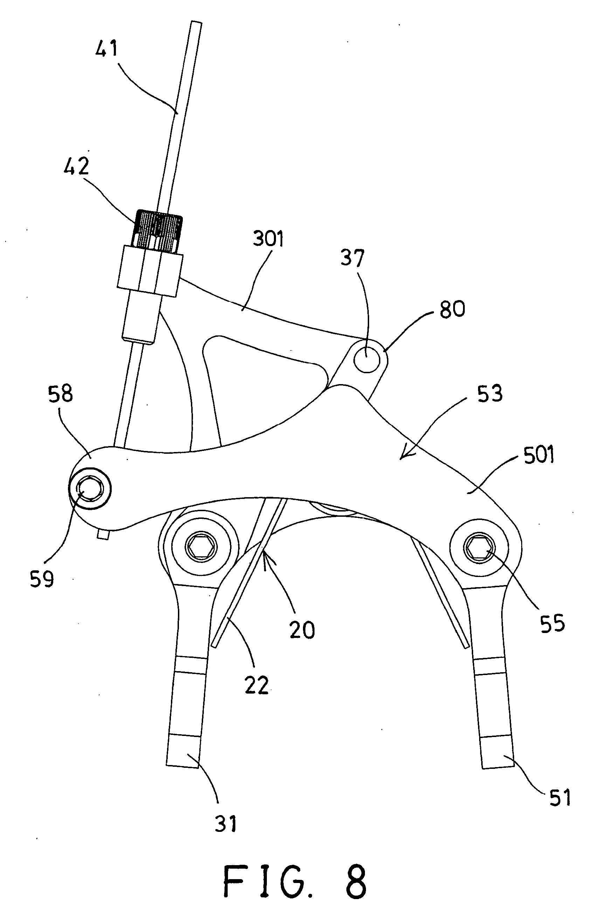

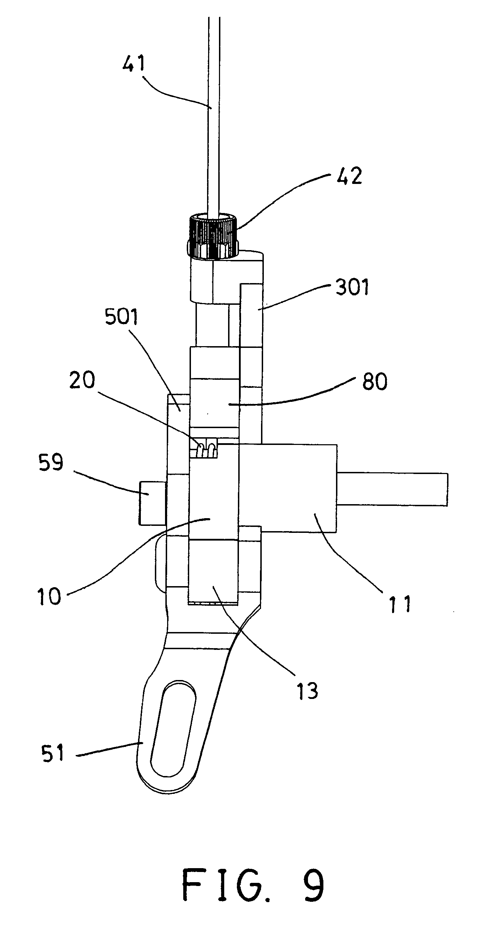

Alternatively, as shown in FIGS. 6-9, an anchor 37 may be extended from the middle portion 33 and perpendicular to the first caliper 301, and the second caliper 501 may include another anchor 57 extended from the middle portion 53 and perpendicular to the second caliper 501, and a link 80 may be coupled to the anchors 37, 57 of the calipers 301, 501 for pivotally coupling the middle portions 33, 53 of the calipers 301, 501 together.

## Claims

1. A bicycle brake device comprising:
an arm (10) including a shaft (11), a first end portion (12) and a second end portion (13),
a first caliper (30) including a middle portion (33) pivotally attached to the first end portion (12) of the arm (10), a lower portion (31) for attaching a brake shoe, and an upper portion (38),
a second caliper (50) including a middle portion (53) pivotally attached to the second end portion (13) of the arm (10), a lower portion (51) for attaching a brake shoe, and
an upper portion (58),
an outer tube (40) engaged with the upper portion (38) of the first caliper (30),
a brake cable (41) engaged through the outer tube (40) and coupled to the upper portion (58) of the second caliper (50) for forcing the upper portions (38, 58) and the lower portions (31, 51) of the calipers and the brake shoes (88) toward each other, and
a spring (20) biasing the lower portions (31, 51) of the calipers and the brake shoes away from each other when the brake cable (41) is released
**characterized in that**
the first caliper (30) includes an ear (34) extended from the middle portion (33) to form a notch (32) in the middle portion (33) of the first caliper (30) for receiving the first end portion (12) of the arm (10), and a first pin (35) is engaged through the first end portion (12) of the arm (10) and the ear (34) of the first caliper (30), and
the second caliper (50) includes an ear (54) extended from the middle portion (53) to form a notch (52) in the middle portion (53) of the second caliper (50) for receiving the second end portion (13) of the arm (10), and a second pin (55) is engaged through the second end portion (13) of the arm (10) and the ear (54) of the second caliper (50).

2. A bicycle brake device as claimed in claim 1, wherein the second caliper includes an oblong hole (56) formed in the middle portion (53), and an anchor (37) extended from the first caliper (30) and slidably engaged in the oblong hole of the second caliper.

3. A bicycle brake device as claimed in claim 1, wherein
an anchor (37) extends from the middle portion (33) and perpendicular to the first caliper (301),
the second caliper (501) includes another anchor (57) extending from the middle portion (53) and perpendicular to the second caliper (501), and
a link (80) is coupled to the anchors (37, 57) of the calipers (301, 501) for pivotally coupling the middle portions (33, 53) of the calipers (301, 501) together.

4. A bicycle brake device as claimed in one of claims 1 to 3, wherein the arm (10) includes a projection (16) and the spring (20) includes a ring (21) for engaging with the projection (16).

5. A bicycle brake device as claimed in claim 4, wherein spring (20) includes two legs (22), which are engaged with the lower portions (31, 51) of the calipers (30, 50) for biasing the brake shoes away from a wheel rim when the brake cable (41) is released.

6. A bicycle brake device as claimed in claim 4, wherein the arm (10) includes a depression (15) for receiving the ring (21) of the spring (20).

7. A bicycle brake device as claimed in one of claims 1 to 6, wherein the brake cable includes a fitting (43) for securing the upper portion (58) of the second caliper to the brake cable (41).

## Patentansprüche

1. Fahrradbremsvorrichtung, umfassend:
einen Schenkel (10), der eine Welle (11), einen ersten Endabschnitt (12) und einen zweiten Endabschnitt (13) aufweist,
einen ersten Bremszangenschenkel (30) mit einem mittleren Abschnitt (33), der drehgelenkig an dem ersten Endabschnitt (12) des Schenkels (10) befestigt ist, einem unteren Abschnitt (31) zum Befestigen eines Bremsschuhs, und einem oberen Abschnitt (38),
einen zweiten Bremszangenschenkel (50) mit einem mittleren Abschnitt (53), der drehgelenkig an dem zweiten Endabschnitt (13) des Schenkels (10) befestigt ist, einem unteren Abschnitt (51) zum Befestigen eines Bremsschuhs, und einem oberen Abschnitt (58),
ein äußeres Rohr (40), das mit dem oberen Abschnitt (38) des ersten Bremszangenschenkels (30) verbunden ist,
ein Bremsseil (41), das durch das äußere Rohr (40) führt und an den oberen Abschnitt (58) des zweiten Bremszangenschenkels (50) gekoppelt ist, um die oberen Abschnitte (38, 58) und die unteren Abschnitte (31, 51) der Bremszangenschenkel und die Bremsschuhe (88) aufeinander zu zu bewegen, und
eine Feder (20), welche die unteren Abschnitte (31, 51) der Bremszangenschenkel und die Bremsschuhe auseinander spannt, wenn das Bremsseil (41) losgelassen wird,
**dadurch gekennzeichnet, dass**
der erste Bremszangenschenkel (30) eine Öse (34) aufweist, die sich von dem mittleren Abschnitt (33) erstreckt und eine Kerbe (32) in dem mittleren Abschnitt (33) des ersten Bremszangenschenkels (30) bildet, um den ersten Endabschnitt (12) des Schenkels (10) aufzunehmen, wobei durch den ersten Endabschnitt (12) des Schenkels (10) und die Öse (34) des ersten Bremszangenschenkels (30) ein erster Stift (35) eingesetzt ist, und
der zweite Bremszangenschenkel (50) eine Öse (54) aufweist, die sich von dem mittleren Abschnitt (53) erstreckt und eine Kerbe (52) in dem mittleren Abschnitt (53) des zweiten Bremszangenschenkels (50) bildet, um den zweiten Endabschnitt (13) des Schenkels (10) aufzunehmen, wobei durch den zweiten Endabschnitt (13) des Schenkels (10) und die Öse (54) des zweiten Bremszangenschenkels (50) ein zweiter Stift (55) eingesetzt ist.

2. Fahrradbremsvorrichtung nach Anspruch 1, wobei in dem mittleren Abschnitt (53) des zweiten Bremszangenschenkels ein Langloch (56) ausgebildet ist und sich von dem ersten Bremszangenschenkel (30) ein Ankerbolzen (37) erstreckt, der verschiebbar in das Langloch des zweiten Bremszangenschenkels eingesetzt ist.

3. Fahrradbremsvorrichtung nach Anspruch 1, wobei
ein Ankerbolzen (37) sich von dem mittleren Abschnitt (33) und senkrecht zu dem ersten Bremszangenschenkel (301) erstreckt,
der zweite Bremszangenschenkel (501) einen weiteren Ankerbolzen (57) aufweist, der sich von dem mittleren Abschnitt (53) und senkrecht zu dem zweiten Bremszangenschenkel (501) erstreckt, und
ein Verbindungsglied (80) mit den Ankerbolzen (37, 57) der Bremszangenschenkel (301, 501) verbunden ist, so dass die mittleren Abschnitte (33, 53) der Bremszangenschenkel (301, 501) drehgelenkig miteinander verbunden sind.

4. Fahrradbremsvorrichtung nach einem der Ansprüche 1 bis 3, wobei der Schenkel (10) einen Vorsprung (16) aufweist und die Feder (20) einen Ring (21) beinhaltet, um mit dem Vorsprung (16) in Eingriff zu kommen.

5. Fahrradbremsvorrichtung nach Anspruch 4, wobei die Feder (20) zwei Arme (22) aufweist, die an den unteren Abschnitten (31, 51) der Bremszangenschenkel (30, 50) befestigt sind, um die Bremsschuhe von einer Felge weg zu spannen, wenn das Bremsseil (41) losgelassen wird.

6. Fahrradbremsvorrichtung nach Anspruch 4, wobei der Schenkel (10) eine Vertiefung (15) aufweist, um den Ring (21) der Feder (20) aufzunehmen.

7. Fahrradbremsvorrichtung nach einem der Ansprüche 1 bis 6, wobei das Bremsseil einen Montagebeschlag (43) aufweist, mithilfe dessen der obere Abschnitt (58) des zweiten Bremszangenschenkels am Bremsseil (41) gesichert werden kann.

## Revendications

1. Dispositif de frein de bicyclette comprenant:
un bras (10) comprenant une tige (11), une première portion d'extrémité (12) et une seconde portion d'extrémité (13),
un premier étrier (30) comprenant une portion médiane (33) attachée de manière pivotante à la première portion d'extrémité (12) du bras (10), une portion inférieure (31) pour attacher un patin de frein, et une portion supérieure (38),
un second étrier (50) comprenant une portion médiane (53) attachée de manière pivotante à la seconde portion d'extrémité (13) du bras (10), une portion inférieure (51) pour attacher un sabot de frein, et une portion supérieure (58),
un tube extérieur (40) en prise avec la portion supérieure (38) du premier étrier (30),
un câble de frein (41) engrené à travers le tube extérieur (40) et couplé à la portion supérieure (58) du second étrier (50) pour forcer les portions supérieures (38, 58) et les parois inférieures (31, 51) des étriers et les sabots de frein (88) l'un vers l'autre et
un ressort (20) qui précontraint les portions inférieures (31, 51) des étriers et les sabots de frein en les éloignant l'un de l'autre lorsque le câble du frein (41) est relâché
**caractérisé en ce**
**que** le premier étrier (30) comprend une oreille (34) qui s'étend à partir de la portion médiane (33) pour former une encoche (32) dans la portion médiane (33) du premier étrier (30) pour recevoir la première portion d'extrémité (12) du bras (10) et une première cheville (35) est engrenée à travers la première portion d'extrémité (12) du bras (10) et l'oreille (34) du premier étrier (30) et
le second étrier (50) comprend une oreille (54) qui s'étend à partir de la portion médiane (53) pour former une encoche (52) dans la portion médiane (53) du second étrier (50) pour recevoir la seconde portion d'extrémité (13) du bras (10) et une seconde cheville (55) est engrenée à travers la seconde portion d'extrémité (13) du bras (10) et l'oreille (54) du second étrier (50).

2. Dispositif de frein de bicyclette selon la revendication 1 dans lequel le second étrier comprend un trou oblong (56) formé dans la portion médiane (53) et un ancrage (37) qui s'étend à partir du premier étrier (30) et engrené de manière coulissante dans le trou oblong du second étrier.

3. Dispositif de frein de bicyclette selon la revendication 1 dans lequel
un ancrage (37) s'étend à partir de la portion médiane (33) et perpendiculairement au premier étrier (301),
le second étrier (501) comprend un autre ancrage (57) qui s'étend à partir de la portion médiane (53) et perpendiculairement au second étrier (501) et
un lien (80) est couplé aux ancrages (37, 57) des étriers (301, 501) pour coupler de manière pivotante les portions médianes (33, 53) des étriers (301, 501) ensemble.

4. Dispositif de frein de bicyclette selon l'une des revendications 1 à 3 dans lequel le bras (10) comprend une projection (16) et le ressort (20) comprend un anneau (21) pour s'engrener avec la projection (16).

5. Dispositif de frein de bicyclette selon la revendication 4 dans lequel le ressort (20) comprend deux montants (22) qui sont en prise avec les portions inférieures (31, 51) des étriers (30, 50) pour charger les sabots de frein en s'éloignant d'une jante lorsque le câble du frein (41) est relâché.

6. Dispositif de frein de bicyclette selon la revendication 4 dans lequel le bras (10) comprend une dépression (15) pour recevoir l'anneau (21) du ressort (20).

7. Dispositif de frein de bicyclette selon l'une des revendications 1 à 6 dans lequel le câble de frein comprend une garniture (43) pour fixer la portion supérieure (58) du second étrier au câble de frein (41).
